# EUROPEAN PATENT APPLICATION

(11) **EP 1 868 125 A1**
(43) Date of publication of application: **19.12.2007**
(21) Application number: 06115589.1
(22) Date of filing: 16.06.2006
(51) Int. Cl.: G06F 21/00

(54) **Method for identifying a user of a computer system**

(71) Applicant: Savernova S.A., 1260 Nyon (CH)
(72) Inventor: Zingg, Dominik, 1260, Nyon (CH)
(74) Representative: Wenger, Joel-Théophile

(57) **Abstract**

The present invention aims improving the security of passwords (PW₁, PW₂) obtained from a characters matrix (M₁, M₂) and a reading path starting at a predefined position in the matrix (M₁, M₂). The solution involves the association of two types of communication channels (ch1, ch2) for obtaining a strong authentication of the user. According to a first embodiment, the user receives via MMS (Multimedia Messaging Service) on a mobile equipment (ME) an image corresponding to a characters matrix (M₁, M₂). Assuming that the user knows the starting point (C1, C2) coordinates and the reading path, he can input the corresponding password (PW₁, PW₂) taken out from the received matrix (M₁, M₂). In a second embodiment, after introduction of his identifier (ID, the user receives, via SMS (Short Message Service) on the mobile equipment (ME), characters corresponding to the coordinates of the starting point (C1, C2). The matrix (M) may be either printed on a card held by the user, or displayed on the computer screen or memorized in the mobile equipment (ME). As the user has the matrix (M) at his disposal and knows the reading path, he can input the corresponding password (PW₁, PW₂) determined with the received starting point (C1, C2) coordinates.

## Description

### Field of the invention

The present invention relates to a method for identifying a user of a computer system before accessing to on or off-line services. Before accessing to local or networked services, it is usually mandatory to introduce user identification data comprising a name and a password known only by the user. Such identification is required, for example at each login for starting a computer or opening a program, before an access to a database, a financial transaction, a message box or any operation made on sensitive data necessitating a protection against malicious users or hackers.

### Technical background

For guaranteeing secure operations on networks which are potentially accessible to anybody, many methods have been imagined as for example.

Document W09852115 describes a method for providing a user access to a secure application. Information necessary to satisfy the authentication requirements of the secure application is stored in an encrypted form. When the user requests access to the secure application a window invites him to introduce several characters generated by a manipulation of a displayed symbol. This user's manipulation of the symbol generates a key used to decrypt the encrypted stored authentication information which is then submitted to the application. In case of a correct decryption result, the user is authorized to access to the application. An advantage of this method is that the user has not to memorize any complex password.

Document W00221463 discloses a coded identification system comprising a computer communicating with at least one terminal via a network. The computer includes data relating to the specific terminal, including a permanent identification code, a mask code and an identification code enabling communication between the computer and the terminal. The permanent identification code is input to the terminal and transmitted to the computer, which generates a pseudo-random string and transmits it to the terminal. The mask code is applied to the pseudo-random string in order to generate a volatile identification code in accordance with predetermined rules. The terminal transmits back this volatile identification code to the computer which checks this code against a volatile identification code obtained by applying the mask code to the pseudo-random string in accordance with the predetermined rules. When the received volatile identification code matches with the generated volatile identification code, the computer considers the terminal as identified and authorizes data exchanges with the terminal.

Document US7031699 describes a services management method for managing subscriber services, wherein the delivery of an access code such as a password to a subscriber is performed by using a Short Message Service (SMS) message. The user identity is verified for example at registering of his mobile equipment number into a website of an operator. The registration is accepted only after introduction of a code received via SMS on the mobile equipment. In this way the operator can check that the introduced equipment number corresponds to the mobile equipment that received the message. The same code can be later used for logging in the website for consulting, for example, invoices, details of the calls made, message box etc.

The drawback of this method is that the complete password for validating the access to personal data is transmitted via a channel which can be exposed to the tapping by hackers.

In order to facilitate identification codes or passwords generation without memorizing a complex character string or storing it in a place accessible to third persons, methods based on characters matrixes can be used, as for example the one described in document W00154073. The user memorizes a first information comprising two characters or symbols. With the first character, he deducts an information indicated on a character matrix. This information combined with the second character allows determining coordinates of a starting point in the matrix. The password is then composed by following a reading path memorized by the user. This solution called "CryptMe" includes two levels. The first level aims to find the first character of the starting point coordinate on a row of the matrix marked with a symbol associated to a user defined category of password. This character once found in the matrix is associated with a symbol marking the row of the matrix wherein the second character is placed. This second character indicates the start of the reading path to follow in the matrix for forming the password (second level).

A one level alternative comprises a matrix of characters whereof a password can be directly retrieved by means of a starting point and a reading path memorized by the user. The starting point is the intersection of a row and a column of the matrix designated by coordinates including two characters associated respectively to the row and column header. This embodiment is commercialized in form of a matrix printed on a card called "PWcard" produced by Savernova Company.

Other visual means can be used for generating and facilitating the memorization of passwords. These means are essentially based on patterns, pictures or symbols sequences or paths defined by moving from one element of an image to another element. The selection of theses visual objects in a given order known by the user only, may generate automatically a character string used as a password or as a key for decrypting a stored information as described in document W09852115.

The increased power and speed of computers attempting to discover a password through systematical tries of all characters combination taken out from a matrix (brute force attack) may present a drawback for the above described identification methods.

In fact the characters defining the coordinates of the starting point and the matrix can be available together from a same source. With these two elements it may be possible to obtain in a reasonable time the correct reading path defining the character string used as password.

The character matrix is usually printed on a card which is generally not secured and left visible to everybody. It is assumed that a password can not be obtained on a matrix as long as the starting point and the reading path remain unknown.

Another possibility is to capture a password in order to find a reading path and a starting point on a known matrix, for example, by carrying out fishing methods as sometimes made by hackers on Internet. In this way, an authorized user can be replaced by another person who can access secured data and cause damages in protected data (identity spoofing).

### Summary of the invention

The aim of the present invention is to overcome the above mentioned drawbacks by improving the security of passwords obtained from a characters matrix and a reading path starting at a predefined position in the matrix.

This aim is reached by a method for identifying a user before accessing sensitive data in a computer system which requests at least one identifier and at least one password built from at least two elements, said password being taken out from a first element consisting of a character matrix by reading a character string following a predetermined reading path beginning at a starting point defined in said matrix with the second element, said method is characterized in that it comprises the steps of
- transmission of the identifier to the computer system via a first communication channel,
- reception of one element allowing building the password via a second communication channel, separated from the first channel,
- if the received element consists of the matrix, determining of a password defined by following the predetermined reading path in the received matrix from a predetermined starting point,
- if the received element consists of the starting point, determining of a password defined by following the predetermined reading path in a predetermined matrix from the received starting point,
- transmission of the determined password to the computer system via the first communication channel for completing the identification of the user.

The solution involves the association of two types of communication channels for obtaining a strong authentication of the user. According to a first embodiment, the user receives via MMS (Multimedia Messaging Service) on a mobile equipment an image corresponding to a characters matrix. A mobile equipment can be defined as being a mobile phone, a PDA (Personal, Digital Assistant), a portable audio-video receiver, a portable computer or any other device connected to a wireless network. This communication is carried out through a point-to-point communication channel addressed to a specific mobile equipment. The matrix is generated randomly on the identification system and stored in a memory of the mobile equipment. This image can be generated and sent while the user registers for the first time with the identification system. Alternatively, one image is generated each time the user introduces his identifier into the computer system. Assuming that the user knows the starting point coordinates and the reading path, he can input the corresponding password taken out from the received matrix.

In a second embodiment, after introduction of his identifier, the user receives, via SMS (Short Message Service) on the mobile equipment, characters corresponding to the coordinates of the starting point. The matrix may be either printed on a card held by the user, or displayed on the computer screen or memorized in the mobile equipment. As the user has the matrix at his disposal and knows the reading path, he can input the corresponding password determined with the received starting point coordinates.

The advantage of this solution is that the two elements required for building a password are not available together on the same communication channel and that the password changes randomly at each user identification session. Such a configuration prevents fishing attempts because one of the elements allowing creating a password is randomly generated and transmitted to the user via a channel separated from the computer system.

### Brief description of the drawings

The invention will be better understood thanks to the following detailed description referring to the enclosed figures given as non-limitative examples.
Figure 1: illustrates a block diagram of a system wherein a password is built from a matrix received via a mobile equipment and with a starting point received in response of a user identifier.
Figure 2: shows an example of a characters matrix wherein a password is created with a given reading path beginning at a received starting point.
Figure 3: shows the matrix of figure 2 wherein the characters have changed, the password build from a new received starting point and with the same reading path is different relatively to the one of the matrix of figure 2.
Figure 4: illustrates a block diagram of a system wherein a password is built from coordinates of a starting point received via a mobile equipment and with a predetermined reading path in a given matrix.
Figure 5: shows an example of a characters matrix with passwords created from starting points localized at different places in the matrix as well at the edges, the reading path being constant.

### Detailed description of preferred embodiments

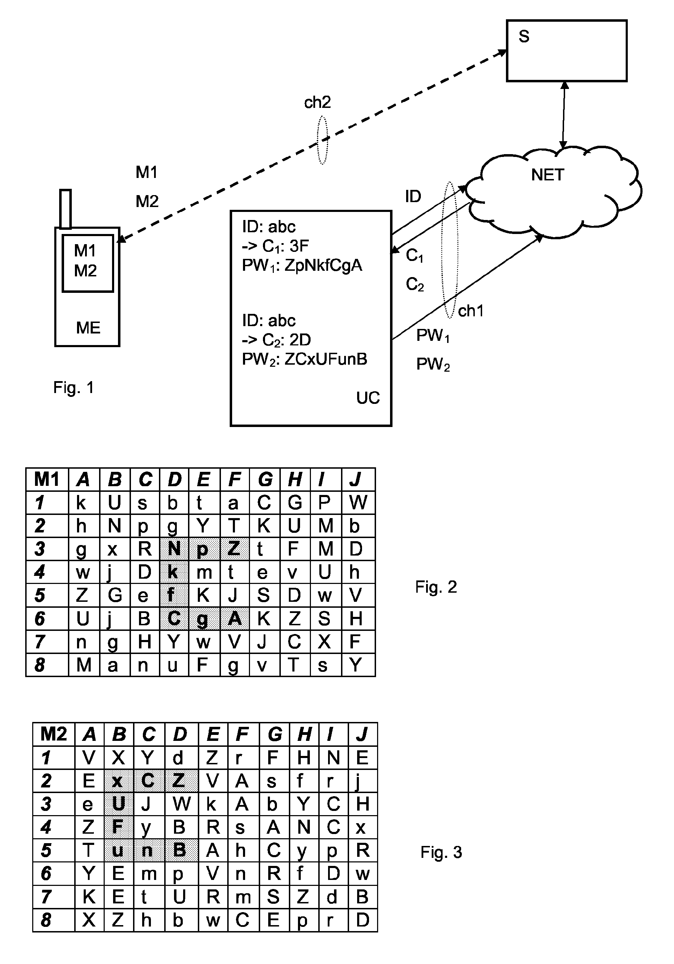

The system illustrated by figure 1 comprises a user computer (UC) connected via a network (NET) to a system (S) requiring a user identifier (ID) and a password (PW) for logging in for example. ln a preferred embodiment, the user introduces his identifier (ID) "abc" in an appropriate interface of the computer (UC) which sends a command to the system (S) via the network, respectively the first channel (ch1) or system data transmission channel. The system (S) responds by sending two elements for determining the password, namely:
- a code corresponding to coordinates of a starting point (C₁, C₂) to select in a matrix (M1, M2), this code (C₁, C₂) being received via the system data transmission channel (ch1).
- a MMS containing a matrix (M1, M2) via the mobile network, respectively the second channel (ch2) to the mobile equipment (ME).

The password (PW₁, PW₂) is determined in the received matrix (M1, M2) by following the user known reading path which begins at the received starting point (C₁, C₂) .

In the example of figure 1, the user receives the starting point, C₁: "3F" after introducing his identifier (ID) "abc" and uses a matrix (M1) sent via the mobile network. In figure 2, at the intersection of row 3 and column F appears the first character "Z" of the password PW₁ "ZpNkfCgA". The reading path defined here as going, from the starting point, 3 cells left, then 3 cells down and then 2 cells right, remains constant whatever the matrix (M₁, M2) received during further user identification processes. In this embodiment, the matrix changes at each identification session needing the input of the user identifier (ID) into the interface.

In the example of figure 3, the modification of the matrix leads to a different password PW₂ "ZCxUFunB" determined in the second matrix (M2) with the received starting point C₂: "2D" and with the same reading path than in previous logging in session.

In a further embodiment, the system does not send a MMS at each user authentication request. For example, a software application is sent via the second channel (ch2) to the mobile equipment (ME). This application generates the first matrix (M₁) and the further ones may be generated at a later stage thanks to the application installed in the mobile equipment (ME). In order to generate a specific matrix, the application comprises a user key that is specific to that user. This key is part of the initialization data of the user and known by the identification system.

Based on the user's key and possibly to other data such as the date, the software application can generate a matrix on the mobile equipment. The same matrix is generated by the identification system when the user's identifier is known.

According to a further embodiment, the starting point received by the user is introduced into the mobile equipment. The starting point data can be used as variable to generate the matrix. It can be introduced manually, or via a wireless link with the user computer such as Bluetooth or infra-red, into the mobile equipment (ME) for obtaining a new matrix (M₁, M₂). For example a mathematical function configured with the introduced starting point can be applied on each character or group of characters composing the matrix, this function being also known by the system.

In another embodiment the provided starting point can correspond to a key for generating a new matrix, the starting point coordinates being known by the user and may be constant as the reading path for each identification session.

The matrix modification can also be carried out periodically in synchronization with the user identification system so that a created password will be recognized by the system at each time period. For example a modification may occur, locally in the mobile equipment, every five minutes during a day after reception of the software application. The starting point can be received at each session or remains constant and known by the user.

In these above described embodiments, the user has only to memorize the reading path and the starting point if not provided by the system in response of the user identification input.

The problem of displaying and reading a relative large matrix on a small display of a mobile equipment can be solved with zoom and navigation keys of the keyboard. For example, as the user knows the starting point, he introduces it directly with the keyboard and the first character of the password will be displayed in the center of the screen. The zoom and navigation keys are then used according to the reading path to follow.

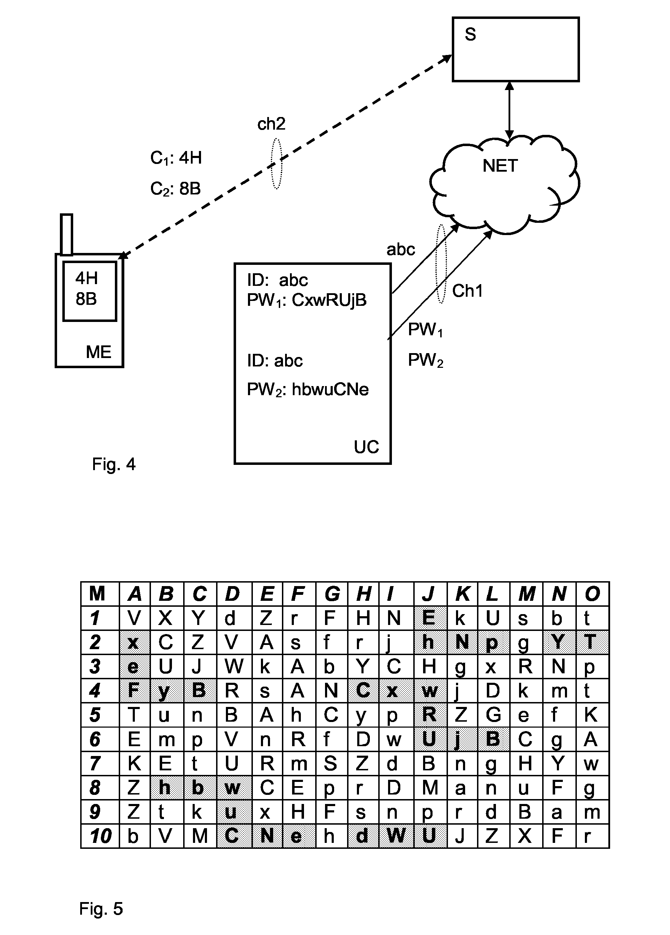

If a starting point corresponds to a character localized close to an edge of the matrix, the password is defined with characters at the opposite edge by following the predefined reading path. In other words the matrix can be compared to a cylinder where characters of an end of a row or a column precede the ones of the beginning of the same row or column when read in the way of the reading path. Examples are illustrated on the matrix of figure 5, with respectively a starting point at "2N" (near the end of line 2) giving the password "YTxeFyB" and at "10H" (at the end of column H) giving the password "dWUEhNp".

In order to be accepted by the system for identifying a user, several data as the matrixes, the starting points and/or algorithms for generating matrixes or starting points, the reading path used for the passwords creation must be transmitted to the system in an initialization process. The user mobile equipment number is also stored within the identification system, which retrieves, at reception of the user identifier (lD), the necessary data to be transmitted via the mobile network to the user.

With the data provided during the user identification process, the system determines the password and compares it with the one received from the user. If both passwords match, the identification is accepted, otherwise it isn't and error messages are displayed on the computer's user interface.

Figure 4 shows a block diagram of a system which structure is the same to the one of figure 1. In this embodiment, the user has a matrix (M) at his disposal as represented in figure 5. He introduces his identifier (ID) "abc" in an appropriate interface of the computer (UC) which sends a command to the system (S) via the network, respectively the first channel (ch1). The system responds by sending a SMS containing the coordinates of the starting point (4H at first time) via the mobile network, respectively the second channel, (ch2) to the mobile equipment (ME).

The matrix (M) can either be printed on a card or displayed on the computer screen in the window of the logging in interface for example, or on the screen of the mobile equipment. The received coordinates *4H" of the starting point allow the creation of the password PW₁ "CxwRUjB" by knowing the reading path going 2 cells right from the starting point, then 2 cells down and then 2 cells right. This path remains constant as well as the matrix (M), only the starting point changes at each user identification session. The example of figure 5 shows a second password PW₂ "hbwuCNe" taken from the same matrix (M) by following the same reading path starting at a different starting point "8B".

In a further embodiment, similarly to the embodiment of figure 1, the system does not send a short message SMS at each user authentication request. For example, a first starting point can be received by SMS and the following ones may be generated off-line thanks to an application of the mobile equipment. In fact, in response of the user identifier introduction, the system responds with a code or key to be introduced into the mobile equipment for obtaining a new starting point. For example a mathematical function configured with the introduced key can be applied on the characters defining the starting point coordinates.

The starting point coordinates modification can also be carried out periodically in synchronization with the user identification system so that a created password will be recognized by the system at each time period. For example a modification may occur, locally in the mobile equipment, each five minute during a day after reception of first coordinates via SMS.

In this case, the user has only to memorize the reading path as in previous embodiments, the matrix being fixed in possession of the user.

In each above described embodiments, the common aspects are that the password is built with two elements each transmitted via a specific communication channel and that the reading path in the matrix is known by the user only and never transmitted over the communication channels during identification sessions.

## Claims

1. Method for identifying a user before accessing sensitive data in a computer system (S) which requests at least one identifier (ID) and at least one password (PW₁, PW₂) built from at least two elements, said password (PW₁,PW₂) being taken out from a first element consisting of a character matrix (M, M₁,M₂) by reading a character string following a predetermined path beginning at a starting point (C₁, C₂) defined in said matrix (M, M₁, M₂) with the second element, said method is **characterized in that** it comprises the steps of
- transmission of the identifier to the computer system (S) via a first communication channel (ch1),
- reception of one element allowing building the password (PW₁, PW₂) via a second communication channel (ch2), separated from the first channel (ch1),
- if the received element consists of the matrix (M, M₁, M₂), determining of a password (PW₁, PW₂) defined by following the predetermined reading path in the received matrix (M, M₁, M₂) from a predetermined starting point (C₁, C₂),
- if the received element consists of the starting point (C₁, C₂), determining of a password (PW₁, PW₂) defined by following the predetermined reading path in a predetermined matrix (M₁, M₂) from the received starting point (C₁, C₂),
- transmission of the determined password (PW₁, PW₂) to the computer system (S) via the first communication channel (ch1) for completing the identification of the user.

2. Method according to claim 1, **characterized in that** the first communication channel (ch1) corresponds to a channel used by the computer system (S) for data transmission and the second communication channel (ch2) to a mobile network transmission channel.

3. Method according to claims 1 and 2, **characterized in that** the matrix (M₁, M₂) is transmitted, via the mobile network, in a MMS message (Multimedia Messaging Service) to a mobile equipment (ME) of the user and **in that** the starting point (C₁, C₂) is transmitted via the system data channel (ch1) in response of the user identifier (lD) introduction into the computer system (S), said starting point (C₁, C₂) and the predetermined reading path allow determining a password (PW₁, PW₂) in the matrix (M₁, M₂).

4. Method according to claims 1 and 2, **characterized in that** the matrix (M₁, M₂) is transmitted, via the mobile network, in a MMS message (Multimedia Messaging Service) to a mobile equipment (ME) of the user and **in that** the starting point (C₁, C₂) is known by the user as well as the reading path.

5. Method according to claims 1 and 2, **characterized in that** the starting point (C₁,C₂) is transmitted, via the mobile network, in a SMS message (Short Message Service) to a mobile equipment (ME) of the user in response of the user identifier (ID) introduction into the computer system (S), said starting point (C₁, C₂) and the predetermined reading path allow determining a password (PW₁, PW₂) in a matrix (M) at disposal of the user in form of a card, a display on the computer screen or on the mobile equipment (ME).

6. Method according to claim 1 to 3, **characterized in that** the received matrix (M₁, M₂) is stored in a memory of the mobile equipment (ME) and modified after introduction of a code into said mobile equipment (ME), said code being received, via the system data channel (ch1), in response of the user identifier (ID) introduction into the computer system (S).

7. Method according to claim 6, **characterized in that** the code corresponds to the starting point (C₁, C₂)coordinates.

8. Method according to claim 1 to 3, **characterized in that** the received matrix (M₁, M₂) stored in a memory of the mobile equipment (ME) changes periodically in synchronization with the user identification system (S).

9. Method according to claims 1, 2 and 5, **characterized in that** the received starting point (C₁, C₂) is stored in a memory of the mobile equipment (ME) and modified after introduction of a key into said mobile equipment (ME), said key being received, via the system data channel (ch1), in response of the user identifier (ID) introduction into the computer system (S).

10. Method according to claims 1, 2 and 5, **characterized in that** the received starting point (C₁, C₂) stored in a memory of the mobile equipment (ME) changes periodically in synchronization with the user identification system.
